# EUROPEAN PATENT SPECIFICATION

(11) **EP 0 488 720 B1**
(45) Date of publication and mention of the grant of the patent: **30.10.1996**
(21) Application number: 91310998.9
(22) Date of filing: 28.11.1991
(51) Int. Cl.: G06K 19/06, G07F 7/10

(54) **A portable electronic device and a method for processing data therefor**
Tragbares elektronisches Gerät und Verfahren zur Datenverarbeitung dafür
Dispositif électronique portatif et méthode de traitement de données

(30) Priority: 29.11.1990 JP 325263/90
(43) Date of publication of application: 03.06.1992
(73) Proprietor: KABUSHIKI KAISHA TOSHIBA, Kawasaki-shi, Kanagawa-ken 210 (JP); Toshiba Intelligent Technology Ltd., Kawasaki-shi, Kanagawa-ken (JP)
(72) Inventor: Kuriyama, Ryouichi, c/o Intellectual Property Div., Minato-ku (JP)
(74) Representative: Shindler, Nigel

(56) References cited:
- EP-A- 0 286 094
- EP-A- 0 291 834
- EP-A- 0 299 826
- FR-A- 2 503 423
- FR-A- 2 635 893

## Description

The present invention relates to a portable electronic device such as an IC card and a method for processing data therefor.

Recently ID cards have been developed as new portable data memory media in which IC chips having control elements such as, for instance non-volatile data memories and CPUs are housed. This type of IC card selectively executes the input and output of required data by the control element accessing the data memory in response to instruction data entered from outside. In this case, the data memory is divided into a plurality of data areas, and it is designed selectively to access the subject area.

In a prior art IC card, whether or not verification of an ID (identification) number is required for each of the plurality of data areas is set for the data memory data area by data area, or a key is applied for setting the ID number verification state for the card manufacturer, the card-issuer and the card-holder. For instance, in the case of a relevant data area being only available for the card-issuer, if the card-issuer's ID number is verified and instruction data is inputted, processing for that instruction data is executed. However, when instruction data is entered by someone other than the card-issuer, response data to the effect that execution conditions are not in order is generated, and processing of the instruction data will not be executed. That is, if instruction data is inputted by someone other than the card-issuer, for instance, the card-holder, response data to the effect that execution conditions are not in order is generated. However it is possible that the card-holder will guess that instruction data can be executed when instruction data is entered by the card-manufacturer or card-issuer. Thus, if the card-holder is unlawfully aware of the card-issuer's or card-manufacturer's ID number, there is danger that the execution of instruction data will be performed by entering instruction data based on the card-issuer's or card-manufacturer's ID number which is fraudulently entered by the card-holder or a third party.

In the case of instruction data which is undefined or not available being entered by, for instance, the card-holder, response data signifying 'undefined instruction data' is generated. However, it is possible that the card holder will guess that instruction data other than the ID number is undefined. Thus, there is a danger that defined or available instruction data can be guessed by entering data at random (i.e. until a negative response is not produced), that is, there is the possibility of the available instruction data becoming identified, and therefore there is a problem of poor security.

French specification no. 2635893 describes a portable electronic device comprising:
first memory means for storing a plurality of identification number data;
means for receiving a plurality of instruction data including identification number verifying instruction data from an external device;
means for verifying the identification number data received by the receiving means by reference to the identification number data stored in the first memory means, when the receiving means receives the identification number data and the identification number verifying instruction data;
second memory means (23-1, 23-2) for storing verification results; and
means for executing the instruction data in response to the verification results.

The present invention seeks to provide a portable electronic device in which security is improved without available instruction data becoming easily identified.

The present invention also seeks to provide a method for processing data for a portable electronic device in which security is improved without available instruction data becoming easily identified.

According to the present invention there is provided a portable electronic device comprising: first memory means for storing a plurality of identification number data;
means for receiving a plurality of instruction data including identification number verifying instruction data from an external device;
means for verifying the identification number data received by the receiving means by reference to the identification number data stored in the first memory means, when the receiving means receives the identification number data and the identification number verifying instruction data;
second memory means for storing verification results; and
means for executing the instruction data in response to the verification results, characterised by:
third memory means for storing control data corresponding to the instruction data and representing a plurality of identifiers each indicating whether identification number verification is required and further indicating whether complete or partial identification number verification is required; and
means for referring to the verification results stored in the second memory means in accordance with the control data stored in the third memory means after the instruction data has been received by the receiving means.

Further, according to the present invention there is provided a method for processing data by a portable electronic device with a memory having first to third memory areas, the method comprising the steps of storing a plurality of identification number data in the first area of the memory; receiving identification number data from an external device; verifying the identification number data received in the receiving step by reference to the identification number data stored in the first memory area of the memory; storing verification results in the second area of the memory;
executing the instruction data in response to the verification results ; receiving instruction data from the external device, characterised by the steps of:
storing, in the third memory area of the memory, control data corresponding to the instruction data and representing a plurality of identifiers each indicating whether identification number verification is required and further indicating whether complete or partial identification number verification is required; and
referring to the verification results stored in the second memory area of the memory in accordance with the control data stored in the third memory area of the memory after the instruction data has been received.

### BRIEF DESCRIPTION OF THE DRAWINGS

FIGURE 1 is a block diagram showing the construction of an IC card handling system to be applied to a method for processing data for a portable electronic device of the present invention;
FIGURE 2 is a block diagram showing the composition of an IC card of the present invention;
FIGURE 3 is a diagram showing the composition of the program memory in the IC card;
FIGURE 4 is a diagram showing the composition of the data memory in the IC card;
FIGURE 5 is a diagram showing a memory example of lead addresses and control information for functional programs stored corresponding to function codes;
FIGURE 6 is a diagram showing the control data in detail;
FIGURE 7 is a diagram showing a memory example of identification numbers data;
FIGURE 8 is a diagram showing data representing the result of ID collation in detail;
FIGURE 9 is a flow-chart illustrating the ID verifying operation; and
FIGURES 10A and 10B are flow-charts illustrating the processing operation.

### DETAILED DESCRIPTION OF THE PREFERRED EMBODIMENT

Referring to the accompanying drawings, a detailed description will subsequently be given of the preferred embodiment of the present invention.

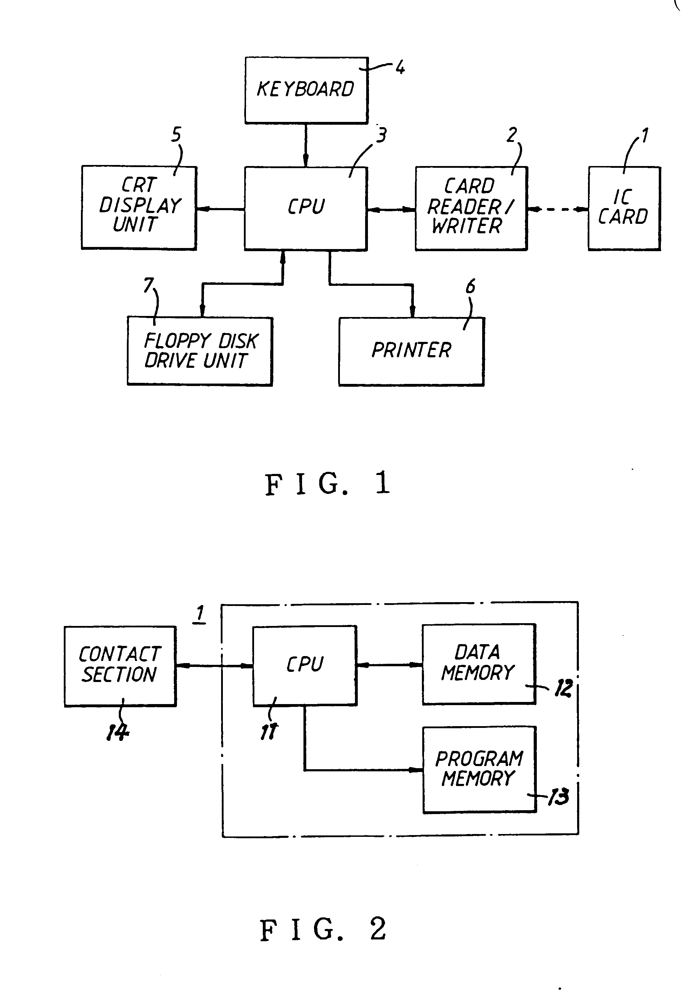

FIGURE 1 shows a block diagram of a card handling system in which an IC card is applied as the portable electronic device. The system is constructed by making IC card 1 connectable to CPU 3 functioning as a control section via card reader/writer 2. Keyboard 4, CRT display unit 5, printer 6 and floppy disk drive unit 7 are connected to CPU 3.

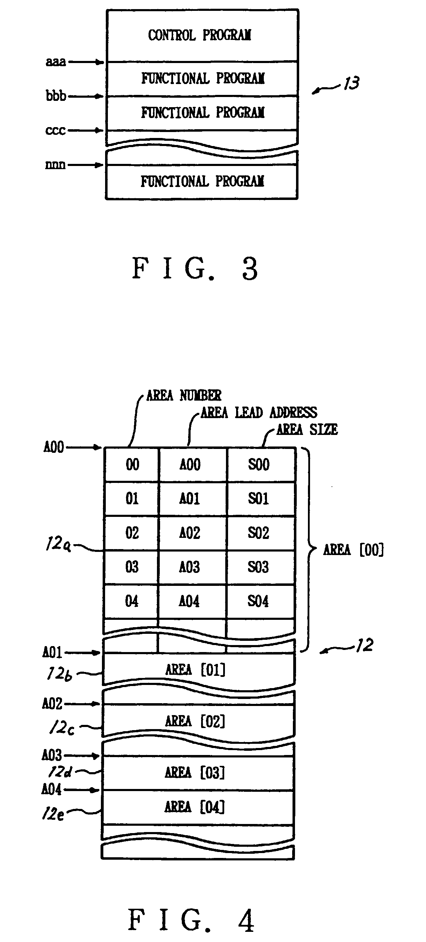

FIGURE 2 shows a block diagram of IC card 1. IC card 1 is composed of CPU 11 as a control element; non-volatile data memory 12, in which the memory content is erasable, as the data memory unit; program memory 13 as the program memory unit, and contact unit 14 for enabling electrical contact with card reader/writer 2. Of these, the parts within the broken outline (CPU 11, data memory 12 and program memory 13) are contained in one IC chip which is embedded in the main body of the IC card. Program memory 13 is composed of, for instance, a mask ROM. As shown in FIGURE 3, program memory 13 stores the control program for CPU 11 which provides functional programs which respond to a plurality of instruction data. Data memory 12 is used for storing various types of data, and is composed of, for instance, an EEPROM.

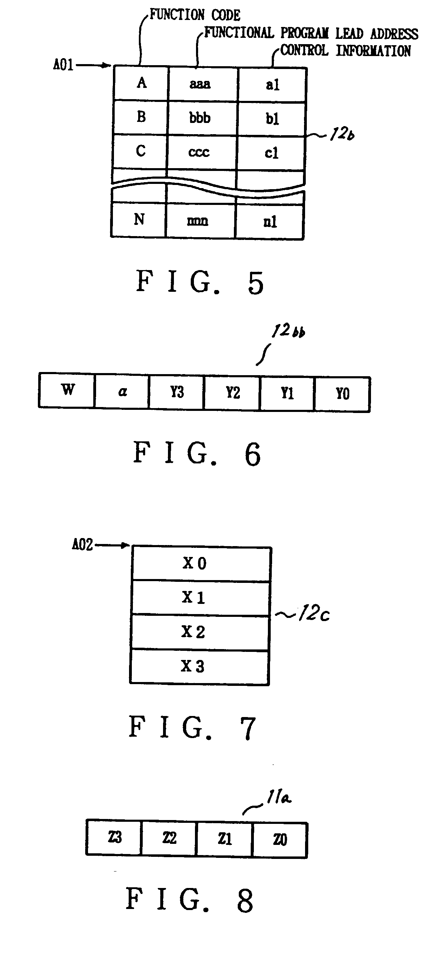

As shown in FIGURE 4, data memory 12 is divided and defined into a plurality of areas, and each area is allotted an area number [00, 01, 02,..]. Of these, in AREA [00] 12a, the respective area lead addresses and area sizes (the numbers of bytes which compose the areas) of all areas are stored corresponding to the area numbers. For instance, this operates in such a way that lead address A03 and area size S03 bytes correspond to AREA [03] 12d. Also, as shown in FIGURE 5, in AREA [01] 12b, the lead address and control data of each functional program is stored corresponding to a function code. For instance, this operates in such a way that the lead address of the program which executes function code [B] is bbb, and the corresponding control data is b1. Moreover, as shown in FIGURE 7, a plurality of identification (hereinafter referred to as ID) number data X0-X3 is stored in AREA [02] 12c. These ID number data X0-X3 are used for verification of ID numbers. For instance, these are ID number data for the card-manufacturer, the card-issuer, the card-holder, etc. AREA [03] 12d, AREA [04] 12e and succeeding areas are respectively data areas.

FIGURE 6 shows the detail of the control data, which are stored in memory area 12bb of AREA [01] 12b, mentioned above. This is composed of identifiers Y0-Y3, W and α. That is, identifiers Y0-Y3 correspond to the above ID number data X0-X3 and indicate whether or not verification of these ID numbers data is required. For instance "1" represents 'required' and "0" represents 'not required'. For instance, if identifier Y0 is "1", this represents that verification of ID number data by ID number data X0 is required. Also, identifier W represents whether checking of identifiers Y0-Y3 is required. For instance "1" represents 'required' and "0" represents 'not required'.

In the combination of identifiers Y0-Y3, identifier a establishes whether all of the ID number verifications or only part of the ID number verifications is required. For instance, "1" represents 'all required' and "0" represents 'part only required'.

FIGURE 8 shows the information which represent the result of the verification of ID numbers, and is composed of identifiers Z0-Z3. That is, identifiers Z0-Z3 correspond to respective ID number data X0-X3, and represent the verification results of these. For instance, "1" represents 'verification agreed' and "0" represents 'verification disagreed'. For instance, if identifier Z0 is "1", this represents that the result of ID number verification by ID number data X0 is 'verification agreed'. Also, this data, that is identifiers Z0-Z3, is stored in memory area 11a in the RAM which is housed in CPU 11.

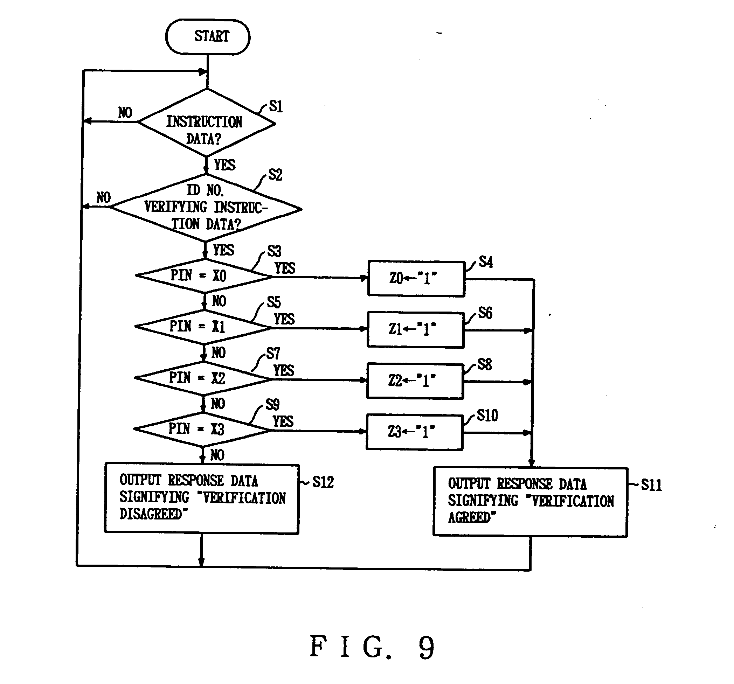

The operation in this type of construction will now be described. First, the ID number verification operation is described with reference to the flow-chart shown in FIGURE 9. In the regular state, IC card 1 is in the ready state for instruction data from card reader/writer 2. In this state, when instruction data from card reader/writer 2 is entered (step S1), CPU 11 judges whether or not this is ID number verifying instruction data (step S2). If it is ID number verifying instruction data, the ID number data to be collated (shown as PIN (Personal Identification Number) in the flow-chart) attributed to this instruction data is sequentially collated with each ID number data X0-X3 stored in area [02] of data memory 12 (steps S3, S5, S7 and S9). If there is ID number data which agrees as the result of this verification, CPU 11 sets the identifier (Z0-Z3) in the RAM which corresponds to the ID number data to "1" (steps S4, S6, S8 and S10). For instance, if PIN agrees with ID number data X0, identifier Z0 is set to "1" (step S4), and if PIN agrees with ID number data X3, identifier Z3 is set to "1" (step S10). Then, CPU 11 generates response data signifying 'verification agreed' to card reader/writer 2 (step S11), and returns to the ready for instruction data state. If, as the result of the above verification, there is no agreement with any of ID number data X0-X3, CPU 11 generates response data signifying 'verification disagreed' to card reader/writer 2 (step S12)., and returns to the ready for instruction data state.

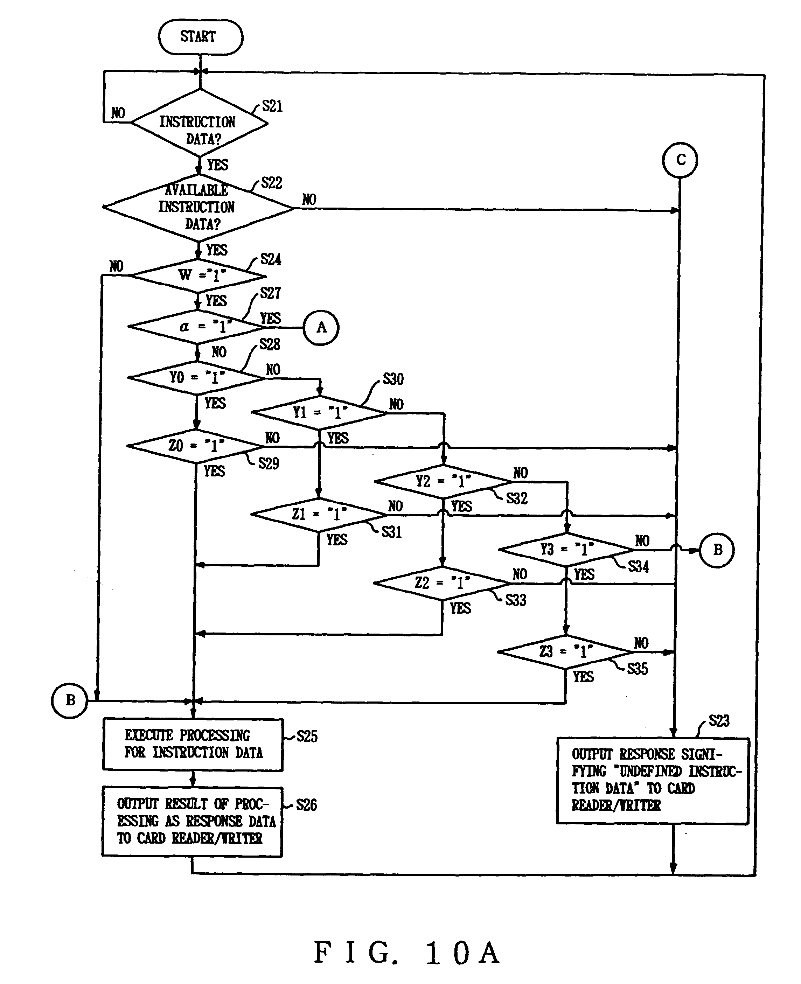

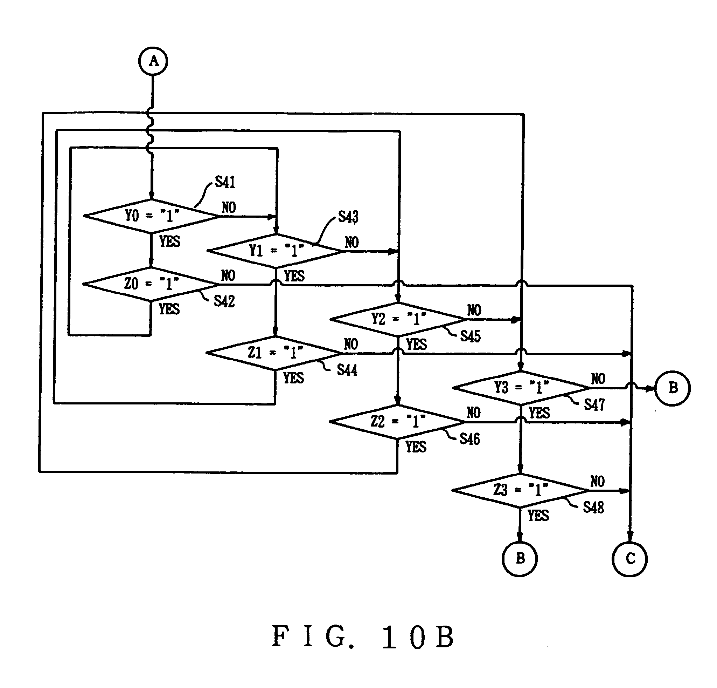

The processing operation based on the instruction data will now be described with reference to the flow-charts shown in FIGURES 10A and 10B. In the regular state, IC card 1 is in the ready state for instruction data from card reader/writer 2. In this state, when instruction data from card reader/writer 2 is entered (step S21), CPU 11 judges whether or not this is available instruction data (step S22). If it is not available instruction data, CPU 11 generates response data signifying 'undefined instruction data' to card reader/writer 2 (step S23) and returns to the ready for instruction data state. If the data is available instruction data, CPU 11 finds the function code attributed to the instruction data from area [01] of data memory 12. Then, CPU 11 refers to the identifier W of the stored control information corresponding to that function code and judges whether W is "1" or not (step S24). If identifier W is not "1", checking of identifiers Y0-Y3 is not required (that is, ID number verification is not required). Thus, CPU 11 executes processing by a functional program corresponding to the relevant instruction data (step S25). That is, CPU 11 recognises the lead address of the functional program stored corresponding to the function code found from area [01] of data memory 12 and steps to that functional program. Then, processing is executed by that functional program, and the processing result is outputted to card reader/writer 2 as response data (step S26), and it returns to the ready for instruction data state.

If identifier W is "1" and the corresponding identifier a is not "1" (step S27), CPU 11 refers to the corresponding control data identifier Y0 (step S28). If identifier Y0 is "1", CPU 11 refers to identifier Z0 of the data representing the result of the ID number verification (step S29), and judges whether this is "1" or not. If Z0 is "1", ID number verification has already been executed, and a verification agreed result has been obtained. In step S29, if Z0 is not "1", since a verification agreed result has not been obtained, response data signifying 'undefined instruction data' is outputted (step S23), and it enters the ready for instruction data state.

In step S28, if identifier Y0 is not "1", CPU 11 refers to control data identifier Y1 (step S30), and if this is "1", CPU 11 refers to identifier Z1 representing the result of the ID number verification and judges whether this is "1" or not (step S31). If Z1 is "1", ID number verification has already been executed and a verification agreed result has been obtained. If Z1 is not "1", since a verification agreed result has not been obtained, response data signifying 'undefined instruction data' is generated (step S23), and it enters the ready for instruction data state.

In step S30, if Y1 is not "1", CPU 11 refers to control data identifier Y2 (step S32), and if this is "1", CPU 11 refers to identifier Z2 and judges whether this is "1", or not (step S33). If Z2 is "1", ID number verification has already been executed and a verification agreed result has been obtained. If Z2 is not "1", since a verification agreed result has not been obtained, response data signifying 'undefined instruction data' is generated (step S23), and it enters the ready for instruction data state.

In step S32, if Y2 is not "1", CPU 11 refers to control data identifier Y3 (step S34), and if this is "1", CPU 11 refers to identifier Z3 and judges whether this is "1", or not (step S35). If Z3 is "1", ID number verification has already been executed and a verification agreed result has been obtained. If Z3 is not "1", since a verification agreed result has not been obtained, response data signifying 'undefined instruction data' is generated(step S23), and it enters the ready for instruction data state.

In step S34, if Y3 is not "1", the flow steps to step S25 as the ID number verification is not required. That is, CPU 11 executes processing by a functional program corresponding to the relevant instruction data (step S25).

In step S27, if identifier α is "1", as shown in FIGURE 10B, CPU 11 refers to the corresponding control data identifiers Y0-Y3 (steps S41, S43, S45 and S47) and finds an identifier which is "1". If CPU 11 finds an identifier which is "1", CPU 11 refers to the identifier (Z0-Z3) of the information representing the result of ID number verification corresponding to that identifier and judges whether it is "1", or not (steps S42, S44, S46 and S48). If each of Z0-Z3 is-"1", ID number verification has already been executed and a 'verification agreed' result has been obtained. Therefore, CPU 11 executes processing by the functional program corresponding to the relevant instruction data as described above. If one of Z0-Z3 is not "1", either ID number verification has not been executed or, even if ID number verification has been executed, a 'verification disagreed' result has been obtained. Therefore, CPU 11 does not execute processing, and generates response data signifying 'undefined instruction data' to card reader/writer 2. It then returns to the ready for instruction data state.

As described above, whether or not ID number verification is required for response to the available instruction data is set. Also, a key is applied to the available instruction data by setting the ID number verification state for the card-manufacturer, the card-issuer and the card-holder. Processing for the instruction data can be selectively executed by judging whether or not the ID number verification result has responded to the instruction data. Also, in the case of unavailable instruction data or the ID number verification result being negative, response data signifying 'undefined instruction data' is generated. By this means, available instruction data do not easily become identified through the response data, and security is improved by judging the combination of the verification results of the card-manufacturer's, card-issuer's and card-holder's IDs.

In the above embodiment, an IC card has been shown as an example of a portable electronic device. However, the present invention is not limited to a card-shaped device. For instance, it may be applied to block-shaped or pencil-shaped devices. Accordingly, it should be understood that the scope of the invention is limited only by the appended claims.

## Claims

1. A portable electronic device comprising: first memory means for storing (12a-12e) a plurality of identification number data (X0-X3);
means (2) for receiving a plurality of instruction data including identification number verifying instruction data from an external device;
means (11) for verifying the identification number data received by the receiving means by reference to the identification number data stored in the first memory means, when the receiving means receives the identification number data and the identification number verifying instruction data;
second memory (11a) means for storing verification results; and
means for executing the instruction data in response to the verification results, characterised by:
third memory means (12aa-12ee) for storing control data corresponding to the instruction data and representing a plurality of identifiers (Y0-Y3; α;W) each indicating whether identification number verification is required and further indicating whether complete or partial identification number verification is required; and
means for referring to the verification results (Z0-Z3) stored in the second memory means in accordance with the control data stored in the third memory means after the instruction data has been received by the receiving means.

2. A device according to claim 1, wherein the identifiers include a first identifier (Y0-Y3) designating which of the identification number data should be verified from among the entered identification number data, and a second identifier (a) indicating whether complete or partial identification number verification is required in respect of the designated identification number data designated by the first identifiers (Y0-Y3) is required.

3. A device according to claim 2, wherein the referring means refers to the verification results of the identification number data should be verified.

4. A device according to claim 1, wherein the first, second and third memory means are contained in one data memory element.

5. A device according to claim 1, wherein the means for referring and means for verifying comprise a CPU contained in the portable electronic device.

6. A method for processing data by a portable electronic device with a memory having first to third memory area, the method comprising the steps of:
storing a plurality of identification number data (X0-X3) in the first area (12a-12e) of the memory;
receiving identification number data from an external device (2);
verifying the identification number data received in the receiving step by reference to the identification number data stored in the first memory area of the memory;
storing verification results (Z0-Z3) in the second area (11a) of the memory;
executing the instruction data in response to the verification results ; receiving instruction data from the external device, characterised by the steps of:
storing, in the third memory area of the memory, control data corresponding to the instruction data and representing a plurality of identifier (Y0-Y3; α;W) each indicating whether identification number verification is required and further indicating whether complete or partial identification number verification is required; and
referring to the verification results stored in the second memory area of the memory in accordance with the control data stored in the third memory area of the memory after the instruction data has been received.

7. A method according to claim 6 further characterised in that: the identification number verification data is received from the external device together with the identification number data and stored in the first memory area before the step of verifying the identification number data and the verification results are stored in the second memory area for each item of identification number verifying instruction data; and also characterised in that the storing and referring steps comprise:
storing, in the third memory area of the memory, a first identifier (W) indicating whether identification number verification is required with respect to each of the instruction data, a second identifier (Y0-Y3) designating the identification number data to be verified from among the plurality of identification number data stored in the first area of the memory, and a third identifier (a) indicating whether complete or partial identification number verification of the identification number data designated by the second identifiers (Y0-Y3) is required;
referring to the verification results of the identification number data to be verified when the identification number verification is required based on the first to third identifiers stored in the third memory area of the memory after the instruction data has been received; and
executing the instruction data when only the identification number data has been verified in the referring step.

## Patentansprüche

1. Tragbares elektronisches Gerät mit: ersten Speichermitteln zum Speichern (12a-12e) einer Anzahl von Identifikationsnummerndaten (X0-X3);
Mitteln (2) zum Empfangen einer Anzahl von Befehlsdaten einschließlich von Befehlsdaten zum Überprüfen von Identifikationsnummern aus einem externen Gerät;
Mitteln (11) zum Überprüfen der von den Empfangsmitteln empfangenen Identifikationsnummerndaten unter Bezugnahme auf die in den ersten Speichermitteln abgespeicherten Identifikationsnummerndaten, wenn die Empfangsmittel die Identifikationsnummerndaten und die Befehlsdaten zur Überprüfung der Identifikationsnummern empfangen;
zweiten Speichermitteln (11a) zum Speichern von Überprüfungsergebnissen; und
Mitteln zum Ausführen der Befehlsdaten in Abhängigkeit von den Überprüfungsergebnissen, **gekennzeichnet durch:**
dritte Speichermittel (12aa-12ee) zum Speichern von Steuerdaten, welche mit den Befehlsdaten korrespondieren und eine Anzahl von Kennzeichnern (Y0-Y3; α; W) darstellen, die jeweils anzeigen, ob eine Überprüfung der Identifikationsnummer erforderlich ist, und die weiterhin anzeigen, ob eine vollständige oder eine teilweise Überprüfung der Identifikationsnummer erforderlich ist; und durch
Mittel zum Verweisen auf die Überprüfungsergebnisse (Z0-Z3), die in den zweiten Speichermitteln gemäß der in den dritten Speichermitteln gepeicherten Steuerdaten abgespeichert sind, nachdem die Befehlsdaten von den Empfangsmitteln empfangen wurden.

2. Gerät nach Anspruch 1, wobei die Kennzeichner erste Kennzeichner (Y0-Y3) aufweisen, die bezeichnen, welche Identifikationsnummerndaten von den eingegebenen Identifikationsnummerndaten überprüft werden sollen, und einen zweiten Kennzeichner (a), der angibt, ob eine vollständige oder eine teilweise Überprüfung der Identifikationsnummer in Hinsicht auf die bezeichneten Identifikationsnummerndaten erforderlich ist, die durch die ersten Kennzeichner (Y0-Y3) bezeichnet sind.

3. Gerät nach Anspruch 2, wobei die Verweisungsmittel auf die Überprüfungsergebnisse der zu überprüfenden Identifikationsnummerndaten verweisen.

4. Gerät nach Anspruch 1, wobei die ersten, zweiten und dritten Speichermittel in einem Datenspeicherelement enthalten sind.

5. Gerät nach Anspruch 1, wobei die Verweisungsmittel und die Überprüfungsmittel eine CPU haben, die in dem tragbaren elektronischen Gerät enthalten ist.

6. Verfahren zur Datenverarbeitung durch ein tragbares elektronisches Gerät mit einem Speicher, der einen ersten bis dritten Speicherbereich hat, wobei das Verfahren die Schritte aufweist:
Speichern einer Anzahl von Identifikationsnummerndaten (X0-X3) in dem ersten Bereich (12a-12e) des Speichers;
Empfangen von Identifikationsnummerndaten aus einem externen Gerät (2);
Überprüfen der in dem Empfangs schritt empfangenen Identifikationsnummerndaten unter Bezugnahme auf die Identifikationsnummerndaten, die in dem ersten Speicherbereich des Speichers abgespeichert sind;
Speichern der Überprüfungsergebnisse (Z0-Z3) in dem zweiten Bereich (11a) des Speichers;
Ausführen der Befehlsdaten in Abhängigkeit von den Überprüfungsergebnissen;
Empfangen von Befehlsdaten aus dem externen Gerät, **gekennzeichnet durch** die Schritte:
Speichern von Steuerdaten in dem dritten Speicherbereich des Speichers, welche mit den Befehlsdaten korrespondieren und eine Anzahl von Kennzeichnern (Y0-Y3; α; W) darstellen, die jeweils anzeigen, ob eine Überprüfung der Identifikationsnummer erforderlich ist, und die ferner anzeigen, ob eine vollständige oder eine teilweise Überprüfung der Identifikationsnummer erforderlich ist; und
Verweisen auf die Überprüfungsergebnisse, die in dem zweiten Speicherbereich des Speichers gemäß der in dem dritten Speicherbereich des Speichers gespeicherten Steuerdaten abgespeichert sind, nachdem die Befehlsdaten empfangen wurden.

7. Verfahren nach Anspruch 6, ferner **dadurch gekennzeichnet,** daß die Überprüfungsdaten für die Identifikationsnummer aus einem externen Gerät zusammen mit den Identifikationsnummerndaten empfangen und in dem ersten Speicherbereich vor dem Schritt des Überprüfens der Identifikationsnummerndaten abgespeichert werden und die Überprüfungsergebnisse in dem zweiten Speicherbereich für jeden Posten der Befehlsdaten zur Überprüfung der Identifikationsnummer abgespeichert werden; und ferner dadurch gekennzeichnet, daß die Speicher-und Verweisungsschritte aufweisen:
Speichern eines ersten Kennzeichners (W) in dem dritten Speicherbereich des Speichers, der angibt, ob eine Überprüfung der Identifikationsnummer hinsichtlich aller Befehlsdaten erforderlich ist, eines zweiten Kennzeichners (Y0-Y3), der die Identifikationsnummerndaten bezeichnet, die aus der Anzahl der in dem ersten Speicherbereich gespeicherten Identifikationsnummerndaten zu überprüfen sind, und eines dritten Kennzeichners (α), der angibt, ob eine vollständige oder eine teilweise Identifikationsnummerüberprüfung der durch die zweiten Kennzeichner (Y0-Y3) bezeichneten Identifikationsnummerndaten erforderlich ist;
Verweisen auf die Überprüfungsergebnisse der zu überprüfenden Identifikationsnummerndaten, wenn die Überprüfung der Identifikationsnummer basierend auf den ersten bis dritten Kennzeichnern erforderlich ist, die in dem dritten Speicherbereich des Speichers abgespeichert werden, nachdem die Befehlsdaten empfangen wurden; und
Ausführen der Befehlsdaten, wenn nur die Identifikationsnummerndaten in dem Verweisungsschritt überprüft wurden.

## Revendications

1. Dispositif électronique portatif comprenant : des premiers moyens de mémoire pour stocker (12a-12e) plusieurs données de numéro d'identification (X0-X3) ;
des moyens (2) pour recevoir plusieurs données d'instruction dont des données d'instruction vérifiant le numéro d'identification à partir d'un dispositif externe ;
des moyens (11) pour vérifier les données de numéro d'identification par les moyens de réception en référence aux données de numéro d'identification stockées dans les premiers moyens de mémoire, lorsque les moyens de réception reçoivent les données de numéro d'identification et les données d'instruction vérifiant le numéro d'identification ;
des deuxièmes moyens de mémoire (11a) pour stocker les résultats de la vérification ; et
des moyens pour exécuter les données d'instruction en réponse aux résultats de la vérification, caractérisé par :
des troisièmes moyens de mémoire (12aa-12ee) pour stocker des données de contrôle correspondant aux données d'instruction et représentant plusieurs identificateurs (Y0-Y3 ; α ; W) indiquant chacun si une vérification de numéro d'identification est exigée ou non et indiquant en outre si une vérification complète ou partielle de numéro d'identification est exigée ; et
des moyens pour consulter les résultats de la vérification (Z0-Z3) stockés dans les deuxièmes moyens de mémoire selon les données de contrôle stockées dans les troisièmes moyens de mémoire après réception des données d'instruction par les moyens de réception.

2. Dispositif selon la revendication 1, dans lequel les identificateurs comprennent un premier identificateur (Y0-Y3) désignant lesquelles des données de numéro d'identification doivent être vérifiées parmi les données de numéro d'identification entrées, et un deuxième identificateur (a) indiquant si une vérification complète ou partielle du numéro d'identification est exigée par rapport aux données de numéro d'identification désignées par les premiers identificateurs (Y0-Y3).

3. Dispositif selon la revendication 2, dans lequel les moyens de consultation consultent les résultats de la vérification des données de numéro d'identification à vérifier.

4. Dispositif selon la revendication 1, dans lequel les premier, deuxième et troisième moyens de mémoire sont contenus dans un élément de mémoire de données.

5. Dispositif selon la revendication 1, dans lequel les moyens de consultation et les moyens de vérification comprennent une unité centrale contenue dans le dispositif électronique portatif.

6. Procédé de traitement de données au moyen d'un dispositif électronique portatif avec une mémoire ayant des première à troisième zones de mémoire, le procédé comprenant les étapes consistant à :
stocker plusieurs données de numéro d'identification (X0-X3) dans la première zone (12a-12e) de la mémoire ; recevoir les données de numéro d'identification à partir d'un dispositif externe (2) ;
vérifier les données de numéro d'identification reçues à l'étape de réception en référence aux données de numéro d'identification stockées dans la première zone de mémoire de la mémoire ;
stocker les résultats de la vérification (Z0-Z3) dans la deuxième zone (11a) de la mémoire ;
exécuter les données d'instruction en réponse aux résultats de la vérification ; recevoir les données d'instruction à partir du dispositif externe, caractérisé par les étapes consistant à :
stocker, dans la troisième zone de mémoire de la mémoire, les données de contrôle correspondant aux données d'instruction et représentant plusieurs identificateurs (Y0-Y3 ; α ; W) indiquant chacun si la vérification du numéro d'identification est exigée ou non et indiquant en outre si une vérification complète ou partielle du numéro d'identification est exigée ; et
consulter les résultats de la vérification stockés dans la deuxième zone de mémoire de la mémoire selon les données de contrôle stockées dans la troisième zone de mémoire de la mémoire après réception des données d'instruction.

7. Procédé selon la revendication 6, caractérisé en outre en ce que : les données de vérification du numéro d'identification sont reçues à partir du dispositif externe avec les données de numéro d'identification et stockées dans la première zone de mémoire avant l'étape de vérification des données de numéro d'identification et les résultats de la vérification sont stockés dans la deuxième zone de mémoire pour chaque élément de données d'instruction vérifiant le numéro d'identification ; et également caractérisé en ce que les étapes de stockage et de consultation comprennent les étapes consistant à :
stocker, dans la troisième zone de mémoire de la mémoire, un premier identificateur (W) indiquant si la vérification du numéro d'identification est exigée ou non par rapport à chacune des données d'instruction, un deuxième identificateur (Y0-Y3) désignant les données de numéro d'identification à vérifier parmi la pluralité de données de numéro d'identification stockées dans la première zone de la mémoire, et un troisième identificateur (α) indiquant si une vérification complète ou partielle du numéro d'identification des données de numéro d'identification désignées par les deuxièmes identificateurs (Y0-Y3) est exigée ;
consulter les résultats de la vérification des données de numéro d'identification à vérifier lorsque la vérification du numéro d'identification est exigée en se basant sur les premier à troisième identificateurs stockés dans la troisième zone de mémoire de la mémoire après réception des données d'instruction ; et
exécuter les données d'instruction lorsque seules les données de numéro d'identification ont été vérifiées à l'étape de consultation.
